# EUROPEAN PATENT SPECIFICATION

(11) **EP 3 482 883 B1**
(45) Date of publication and mention of the grant of the patent: **05.10.2022**
(21) Application number: 18178307.7
(22) Date of filing: 18.06.2018
(51) Int. Cl.: B25J 9/00

(54) **EXOSKELETON ROBOT**
EXOSKELETT-ROBOTER
ROBOT D'EXOSQUELETTE

(30) Priority: 13.11.2017 US 201715811102
(43) Date of publication of application: 15.05.2019
(73) Proprietor: Free Bionics Taiwan Inc., 300 Hsinchu City (TW)
(72) Inventor: TSAI, YI-JENG, 330, TAOYUAN CITY (TW); TENG, MING-CHANG, 300, HSINCHU CITY (TW)
(74) Representative: 2K Patentanwälte Blasberg Kewitz & Reichel

(56) References cited:
- EP-A1- 2 923 685
- US-A1- 2014 100 493
- US-A1- 2014 276 264
- US-A1- 2016 339 583

## Description

### TECHNICAL FIELD

The present disclosure relates generally to a walking assist device and, more particularly, to an exoskeleton robot.

### DISCUSSION OF THE BACKGROUND

An exoskeleton robot, which is also known as powered armor, is a wearable mobile machine that supports the body of a user and move limbs of the user. Generally, an exoskeleton is powered by a system of electric motors, pneumatics, levers, hydraulics, or a combination of technologies that can move limbs. One of the main applications is medical. The exoskeleton robot can help persons who lose or lose control of their legs or arms due to illness or accidental injury.

While the exoskeleton robots are worn by patients in hospitals or rehabilitation centers, the care workers need to adjust the exoskeleton robots to fit patients with a variety of body sizes. Moreover, patients with different injured parts also need different adjustments of the exoskeleton robots.

However, the structures of the traditional exoskeleton robots require the care workers to completely disassembled bolts or screws to adjust sizes of the traditional exoskeleton robots, and thus waste a lot of time and manpower.

Therefore, to save time and manpower, there is a requirement to quickly adjust the exoskeleton robots to fit patients with a variety of body sizes or different injured parts.

EP 2923685 discloses a walking assist device including a waist assembly and at least one leg assembly connected to the waist assembly. The leg assembly includes a thigh stand, a shank stand, a sole, a hip joint, a knee joint and an ankle joint. The hip joint is pivoted to the thigh. The knee joint is pivoted to the thigh stand and connected to the shank stand. The ankle joint includes at least a flexible plate and an elastic member. The flexible plate includes a first end and a second end opposite to each other. The first end is pivoted to the shank stand directly or indirectly, the second end is connected to the sole, and the elastic member presses the first end of the flexible plate.

### SUMMARY

The present invention provides an exoskeleton robot as defined in appended claim 1.

Preferred embodiments are defined in the depended claims.

The present invention provides an exoskeleton robot with the slots and the rails to connect two elements, such as frames, assemblies or stands, more specifically a chest board and a frame of a chest assembly of the exoskeleton robot, and a relative position of the two elements is adjustable by sliding the slider, the screws or the bolts without fully disengaging the screws or the bolts from the elements. Thus, there are advantages to save effort to adjust the relative position of the elements of the exoskeleton robot to fully meet adjustment requirements, including a waist width, a chest support height, a chest width, a hip depth, a thigh length, a thigh circumference, a shank length, and a shank circumference.

The foregoing has outlined rather broadly the features and technical advantages of the present disclosure in order that the detailed description of the disclosure that follows may be better understood. Additional features and advantages of the disclosure will be described hereinafter, and form the subject of the claims of the disclosure.

### BRIEF DESCRIPTION OF THE DRAWINGS

A more complete understanding of the present disclosure may be derived by referring to the detailed description and claims when considered in connection with the Figures, where like reference numbers refer to similar elements throughout the Figures.

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view of an exoskeleton robot based on an embodiment of the present disclosure.
FIG. 2 is a perspective view illustrating a structure to assemble the right leg assembly to the waist assembly in accordance with some embodiments of the present disclosure.
FIG. 3 is a perspective view illustrating a structure to assemble the waist assembly in accordance with some embodiments of the present disclosure.
FIG. 4 is a front view of a structure of the chest assembly and the waist assembly in accordance with some embodiments of the present disclosure.
FIG. 5 is a perspective view illustrating a structure to assemble the chest assembly to the back stand and the waist assembly in accordance with some embodiments of the present disclosure.
FIGS. 6A-6C are cross-sectional views along Lines B-B, D-D, and E-E of FIG. 4.
FIG. 7A is a front view of the right leg assembly in accordance with some embodiments of the present disclosure.
FIG. 7B is a perspective view of the right leg assembly in accordance with some embodiments of the present disclosure.
FIG. 8A is an exploded view of the right leg assembly viewed from the right side in accordance with some embodiments of the present disclosure.
FIG. 8B is an exploded view of the right leg assembly viewed from the left side in accordance with some embodiments of the present disclosure.
FIG. 9A is an exploded view of the thigh stand viewed from the right side in accordance with some embodiments of the present disclosure.
FIG. 9B is an exploded view of the thigh stand viewed from the left side in accordance with some embodiments of the present disclosure.
FIG. 9C is a left side view of the thigh stand in accordance with some embodiments of the present disclosure.
FIGS. 10A and 10B are cross-sectional views along Lines C-C, and G-G of FIG. 9C.
FIG. 11A is an exploded view of the shank stand viewed from the right side in accordance with some embodiments of the present disclosure.
FIG. 11B is an exploded view of the shank stand viewed from the left side in accordance with some embodiments of the present disclosure.
FIG. 11C is a left side view of the shank stand in accordance with some embodiments of the present disclosure.
FIG. 12 is a cross-sectional view along Line H-H of FIG. 11C.

### DETAILED DESCRIPTION

Embodiments, or examples, of the disclosure illustrated in the drawings are now described using specific language. It shall be understood that no limitation of the scope of the disclosure is hereby intended. Any alteration or modification of the described embodiments, and any further applications of principles described in this document, are to be considered as normally occurring to one of ordinary skill in the art to which the disclosure relates. Reference numerals may be repeated throughout the embodiments, but this does not necessarily mean that feature(s) of one embodiment apply to another embodiment, even if they share the same reference numeral.

It shall be understood that, although the terms first, second, third, etc. may be used herein to describe various elements, components, regions, layers or sections, these elements, components, regions, layers or sections are not limited by these terms. Rather, these terms are merely used to distinguish one element, component, region, layer or section from another region, layer or section. Thus, a first element, component, region, layer or section discussed below could be termed a second element, component, region, layer or section without departing from the teachings of the present inventive concept.

The terminology used herein is for the purpose of describing particular example embodiments only and is not intended to be limited to the present inventive concept. As used herein, the singular forms "a," "an" and "the" are intended to include the plural forms as well, unless the context clearly indicates otherwise. It shall be further understood that the terms "comprises" and "comprising," when used in this specification, point out the presence of stated features, integers, steps, operations, elements, or components, but do not preclude the presence or addition of one or more other features, integers, steps, operations, elements, components, or groups thereof.

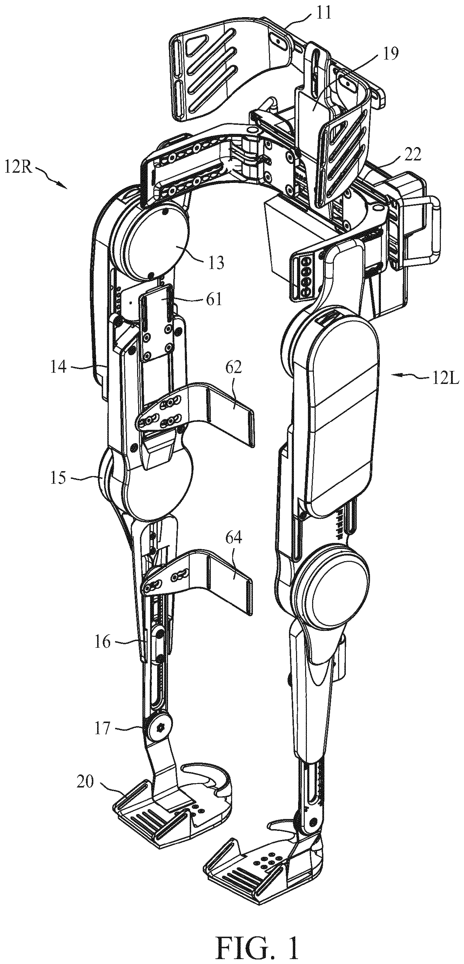

FIG. 1 is a perspective view of an exoskeleton robot 10 in accordance with some embodiments of the present disclosure. Referring to FIG. 1, the exoskeleton robot 10 includes a chest assembly 11, a back stand 19, a waist assembly 22, a right leg assembly 12R, and a left leg assembly 12L.

The chest assembly 11 is installed in the back stand 19, and the back stand 19 is installed in the waist assembly 22. Each of the right leg assembly 12R and the left leg assembly 12L is connected to the waist assembly 22 via a respective hip joint 13. Since the right leg assembly 12R and the left leg assembly 12L are symmetric in physical configuration to each other, for convenience, only the right leg assembly 12R is discussed.

The right leg assembly 12R includes a thigh stand 14, a shank stand 16, a knee joint 15, an ankle joint 17, and a shoe assembly 20 in addition to the hip joint 13.

The thigh stand 14, having an elongated shape, is pivotally connected at one end to the waist assembly 22 via the hip joint 13, and pivotally connected at another end to the shank stand 16 via the knee joint 15. As a result, the thigh stand 14 and the shank stand 16 are rotatable with respect to the knee joint 15.

The shank stand 16, also having an elongated shape, is pivotally connected at one end to the thigh stand 14 via the knee joint 15, and pivotally connected at another end to the shoe assembly 20 via the ankle joint 17. As a result, the shank stand 16 and the right shoe assembly 20 are rotatable with respect to the ankle joint 17.

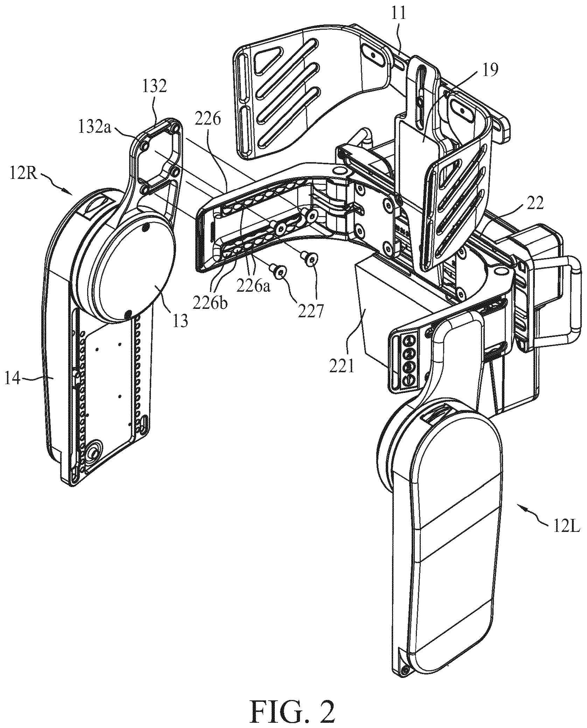

FIG. 2 is a perspective view illustrating the structure to assemble the right leg assembly 12R to the waist assembly 22 in accordance with some embodiments of the present disclosure. Referring to FIG. 2, a side frame 226 includes two horizontal slots 226a. A hip frame 132 of the right leg assembly 12R is installed in a side frame 226 of the waist assembly 22 by bolts 227 passing through the two horizontal slots 226a of the side frame 226 and screwed into holes 132a of the hip frame 132. Further, the slots 226a include multiple indentations 226b along the slots 226a to fit heads of the bolts 227.

By loosening but not detaching the bolts 227 from holes 132a of the hip frame 132, the user can slide the bolts 227 in the two horizontal slots 226a to adjust a relative horizontal distance between the right leg assembly 12R and the buttock pad 221 to fit the hip of the user.

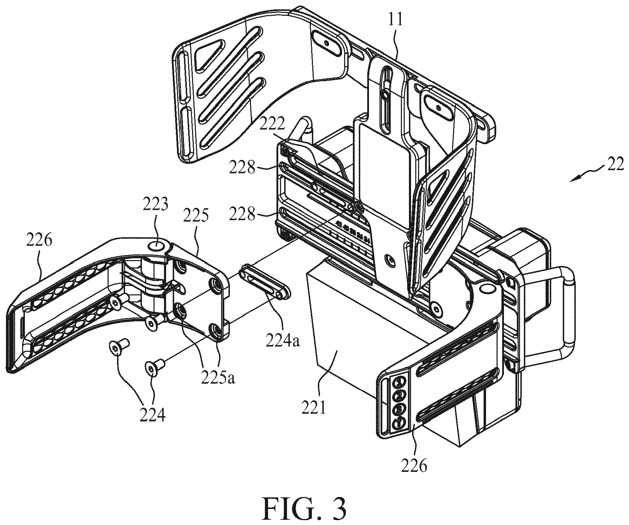

FIG. 3 is a perspective view illustrating the structure to assemble the waist assembly 22 in accordance with some embodiments of the present disclosure. Referring to FIG. 3, the side frame 226 is installed in an install plate 225 by a waist joint 223, and thus the side frame 226 is pivotally connected to the install plate 225. Further, the install plate 225 is installed in the base frame 222 by bolts 224 passing through holes 225a of the install plate 225 and screwed into sliders 224a.

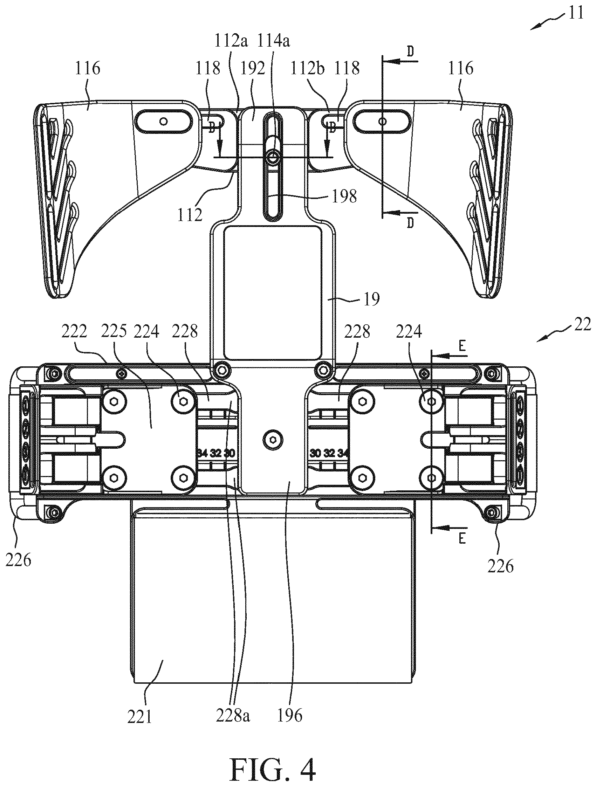

FIG. 4 is a front view of the structure of the chest assembly 11 and the waist assembly 22 in accordance with some embodiments of the present disclosure. Referring to FIGS. 3 and 4, the base frame 222 includes two rails 228, and each of the rails 228 includes two expanded sections 228a. The sliders 224a are put into the rails 228 of the base frame 222 through expanded sections 228a of the rails 228, and then the expanded sections 228a can be covered by a rail cover 196 of the back stand 19. The rails 228 are horizontal and allow the sliders 224a moving horizontally.

The back stand 19 is installed in the waist assembly 22 by bolting the rail cover 196 in the base frame 222 of the waist assembly 22. The sliders 224a can be moved along the rails 228. Therefore, by loosening but not detaching the bolts 224 from the sliders 224a, the user can slide the sliders 224a in the rails 228 to adjust a relative horizontal distance between the side frames 226, and the waist assembly 22 can be configured to fit and support a user of the exoskeleton robot 10 at the waist and the hip.

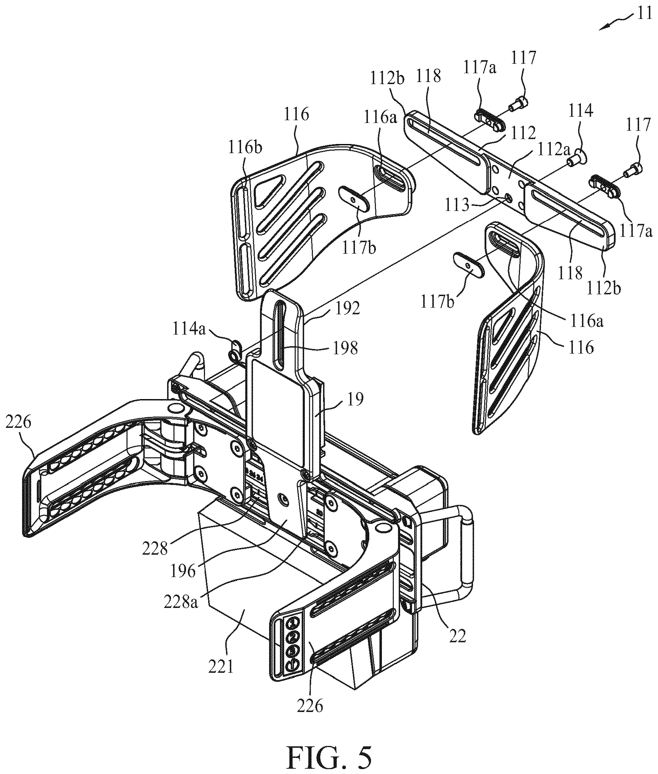

FIG. 5 is a perspective view illustrating the structure to assemble the chest assembly 11 to the back stand 19 and the waist assembly 22 in accordance with some embodiments of the present disclosure. Referring to FIG. 5, the chest assembly 11 is installed in the back stand 19 by a bolt 114 passing through a hole 113 of the center part 112a of a center frame 112 of the chest assembly 11, and screwed into a slider 114a in a rail 198. The slider 114a is inside the rail 198 of the back frame 192 of the back stand 19 and can be moved along the rail 198. Thus, by loosening but not detaching the bolt 114 from the slider 114a, the user can slide the slider 114a in the rails 198 to adjust a vertical height of the chest assembly 11.

Further, the chest boards 116 are installed in wings 112b of the center frame 112 by screwing bolts 117 through sliders 117a, rails 118 of the wings 112b of the center frame 112, slots 116a of the chest boards 116, and slot covers 117b. Because the sliders 117a engage with the slots 116a, and thus the position of the sliders 117a in the rails 118 can be slid to adjust a relative horizontal distance between side boards 116b of the chest boards 116 by loosening but not detaching the bolts 117 from the sliders 117a. Therefore, the chest assembly 11 can be configured to fit and support a user of the exoskeleton robot 10 at the chest.

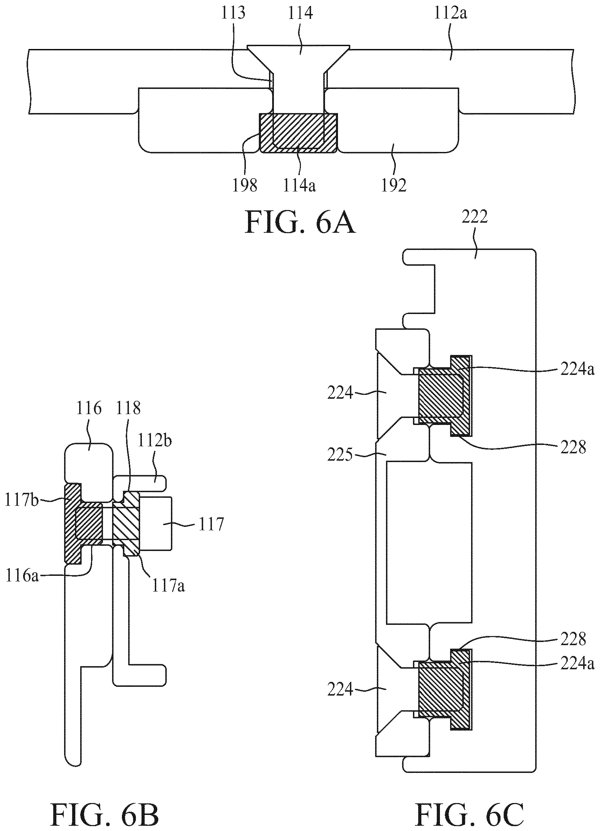

FIG. 6A is a cross-sectional view along Line B-B of FIG. 4. Referring to FIGS. 4 and 6A, the bolt 114 passes through the hole 113 of the center part 112a, the rail 198, and the slider 114a. The cross-section of the rail 198 is a groove with two steps in two sides to contain the slider 114a and prevent the slider 114a from being pulled out of the rail 198.

FIG. 6B is a cross-sectional view along Line D-D of FIG. 4. Referring to FIGS. 4 and 6B, the bolts 117 passes through the sliders 117a, rails 118 of the wings 112b, the slots 116a of the chest boards 116, and the slot covers 117b. The cross-section of the rail 118 is a groove with two steps in two sides to contain the slider 117a and prevent the slider 117a from being pulled out of the rail 118.

FIG. 6C is a cross-sectional view along Line E-E of FIG. 4. Referring to FIGS. 4 and 6C, bolts 224 are screwed into the sliders 224a, and the install plate 225. The sliders 224a are inside the rails 228. The cross-section of the rail 228 is a groove with two steps in two sides to contain the slider 224a and prevent the slider 224a from being pulled out of the rail 228.

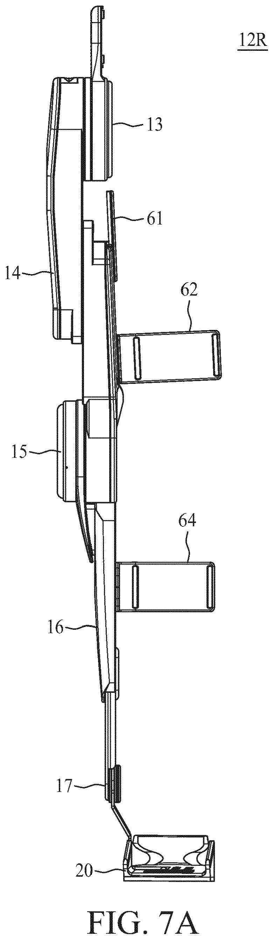

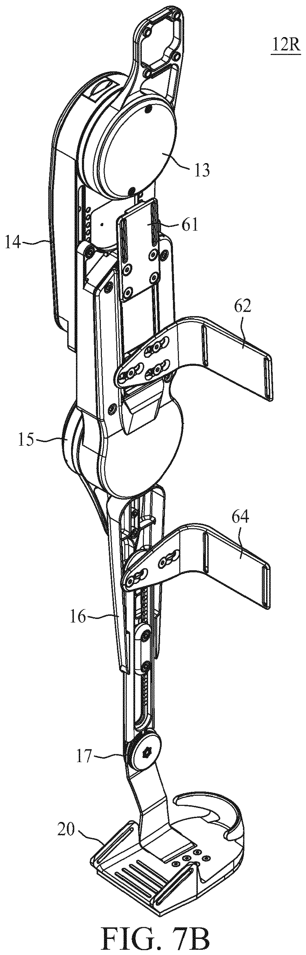

FIG. 7A is a front view of the right leg assembly 12R in accordance with some embodiments of the present disclosure. FIG. 7B is a perspective view of the right leg assembly 12R in accordance with some embodiments of the present disclosure.

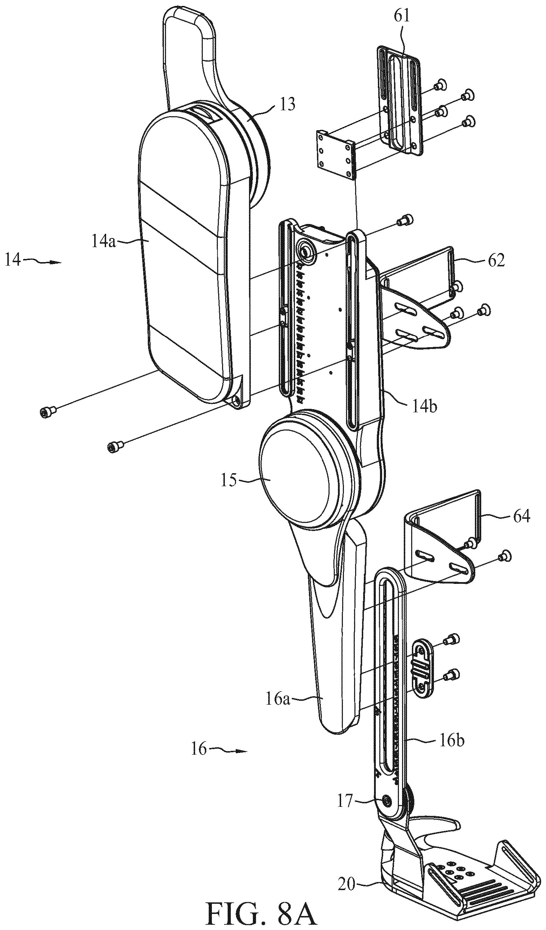

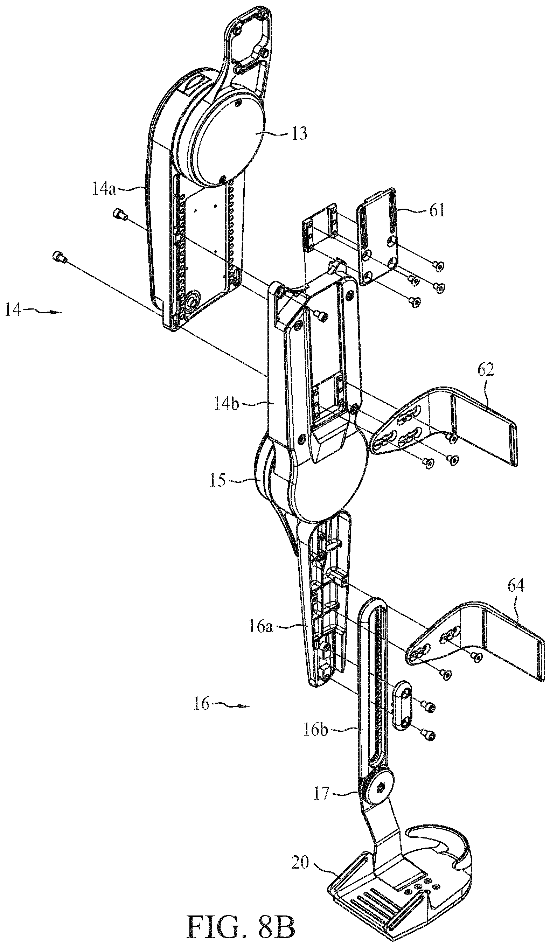

FIG. 8A is an exploded view of the right leg assembly 12R viewed from the right side in accordance with some embodiments of the present disclosure. FIG. 8B is an exploded view of the right leg assembly 12R viewed from the left side in accordance with some embodiments of the present disclosure.

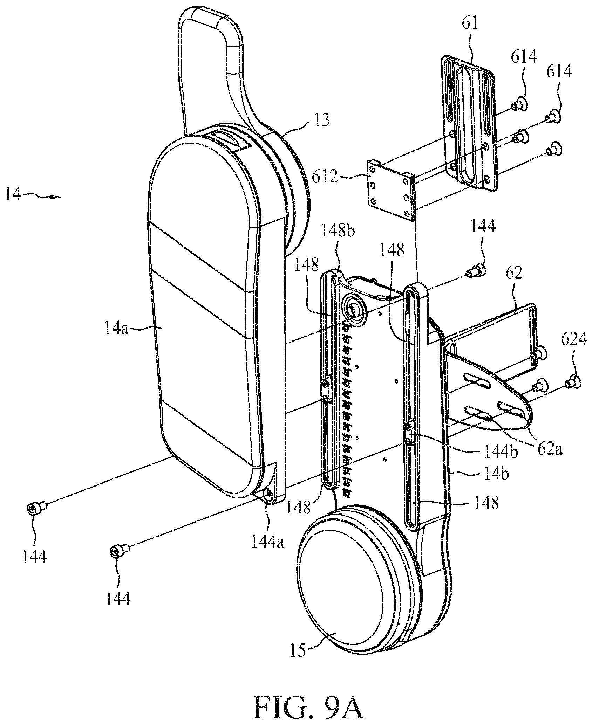

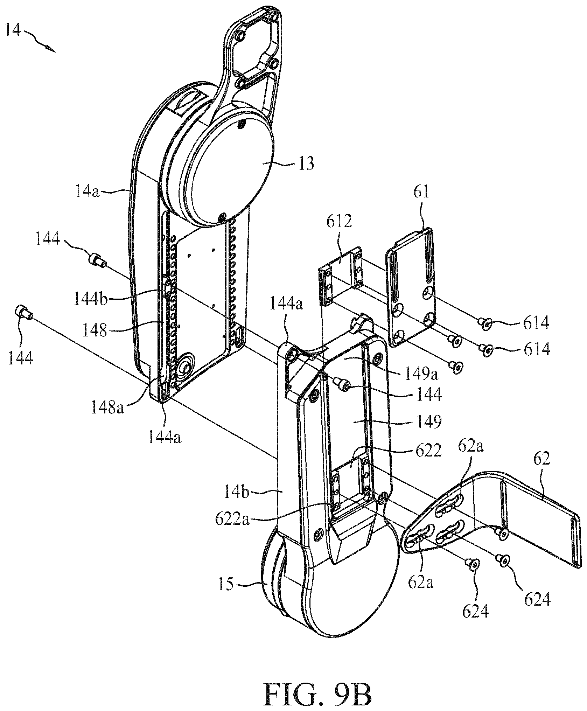

FIG. 9A is an exploded view of the thigh stand 14 viewed from the right side in accordance with some embodiments of the present disclosure. FIG. 9B is an exploded view of the thigh stand 14 viewed from the left side in accordance with some embodiments of the present disclosure. Referring to FIGS. 9A and 9B, the thigh stand 14 includes an upper thigh stand 14a and a lower thigh stand 14b.

The upper thigh stand 14a is pivotally connected to the hip joint 13, and has two holes 144a, a vertical rail 148, and a slider 144b inside the vertical rail 148. The lower thigh stand 14b is pivotally connected to the knee joint 15, and has a hole 144a, two vertical rails 148, and two sliders 144b inside the vertical rails 148.

Three bolts 144 pass through the three holes 144a and the three sliders 144b inside the two vertical rails 148. Therefore, the upper thigh stand 14a and the lower thigh stand 14b are connected through three sliders 144b in the two vertical rails 148, and can be moved from each other along the two vertical rails 148 by loosening but not detaching the bolts 144 from the sliders 144b to extend or contract the thigh stand 14 so that the length of the thigh stand 14 is adjustable to fit the thigh length of the user.

The vertical rail 148 of the upper thigh stand 14a and the first vertical rail 148 of the lower thigh stand 14b include expanded sections 148a to put the sliders 144b inside the vertical rails 148. The second vertical rail 148 of the lower thigh stand 14b includes an open end 148b to put the slider 144b inside the second vertical rail 148.

Further, a slider 612 can be put into a vertical rail 149 of the lower thigh stand 14b through the open end 149a of the vertical rail 149. A shield 61 can engage the rail 149 through the slider 612. The bolts 614 pass through the shield 61 and are screwed into the slider 612 inside the vertical rails 149. Therefore, the shield 61 and the lower thigh stand 14b are connected through the slider 612 in the vertical rail 149. By loosening but not detaching the bolts 614 from the slider 612, the shield 61 can be moved along the vertical rail 149 of the lower thigh stand 14b so that the position of the shield 61 is adjustable to fit the need of the user.

Moreover, a slider 622 can be put into the vertical rail 149 of the lower thigh stand 14b through the open end 149a of the vertical rail 149, too. A thigh support 62 can engage the rail 149 through the slider 622. The bolts 624 pass through horizontal slots 62a of the thigh support 62 and are screwed into the slider 622 inside the vertical rails 149. Therefore, the thigh support 62 and the lower thigh stand 14b are connected through the slider 622 in the vertical rail 149. By loosening but not detaching the bolts 624 from the slider 622, the thigh support 62 can be moved along the vertical rail 149 or the horizontal slots 62a so that the position of the thigh support 62 is adjustable vertically and horizontally to fit the need of the user.

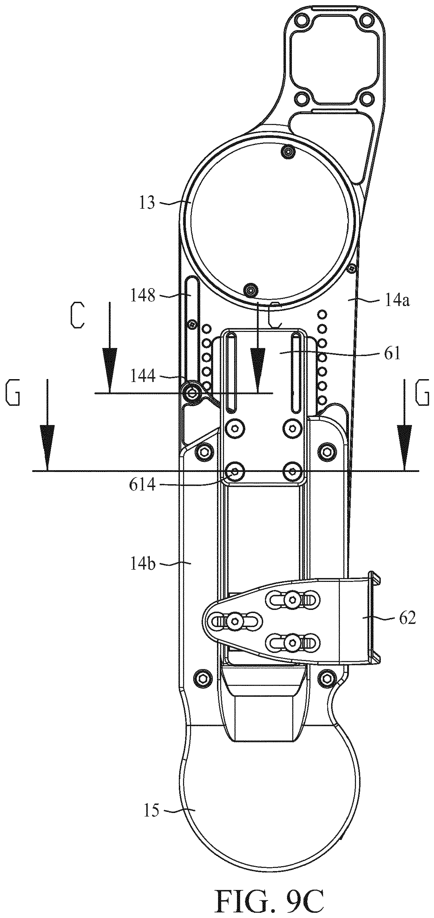

FIG. 9C is a left side view of the thigh stand 14 in accordance with some embodiments of the present disclosure.

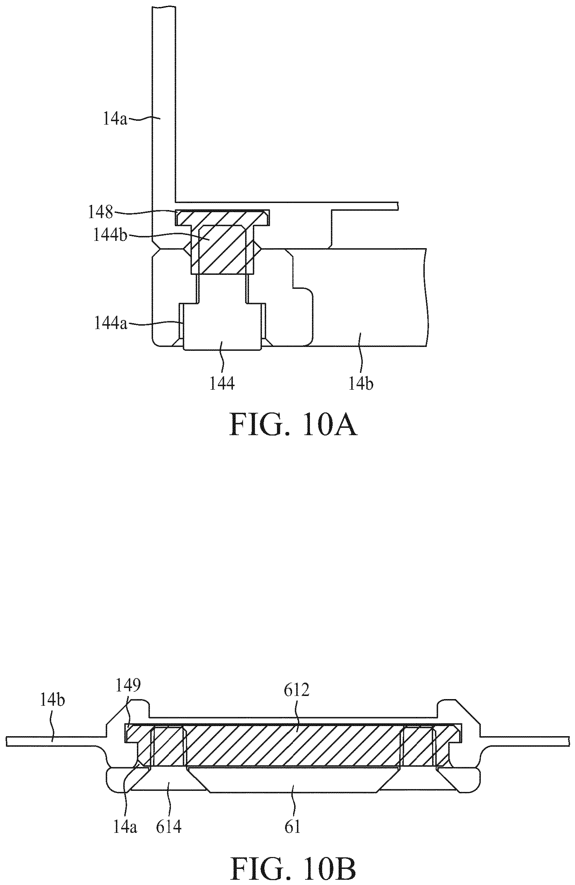

FIG. 10A is a cross-sectional view along Line C-C of FIG. 9C. Referring to FIG. 10A, the bolt 144 passes through the hole 144a of the lower thigh stand 14b, and is screwed into the slider 144b inside the rail 148. The cross-section of the rail 148 is a groove with two steps in two sides to contain the slider 144b and prevent the slider 144b from being pulled out of the rail 148.

FIG. 10B is a cross-sectional view along Line G-G of FIG. 9C. Referring to FIG. 10B, the bolt 614 passes through the shield 61, and is screwed into the slider 612 inside the rail 149. The cross-section of the rail 149 is a groove with two steps in two sides to contain the slider 612 and prevent the slider 612 from being pulled out of the rail 149.

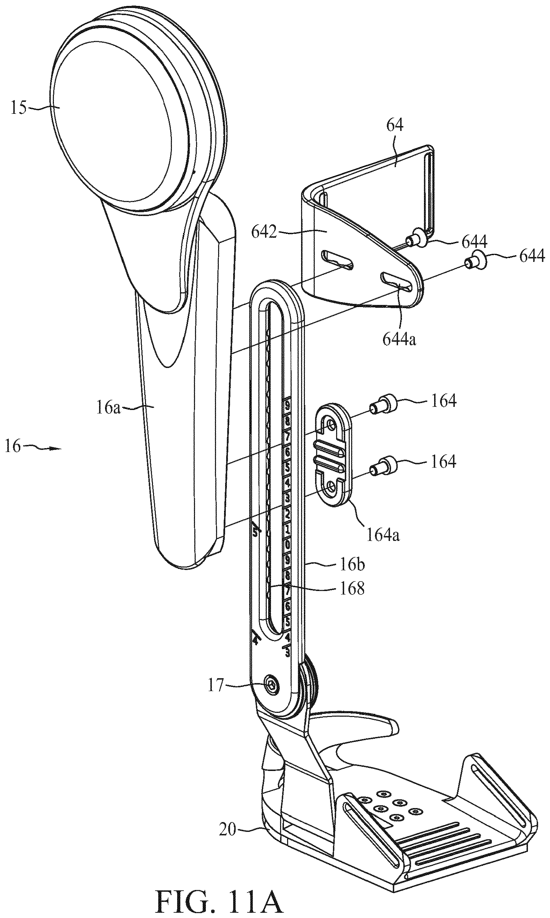

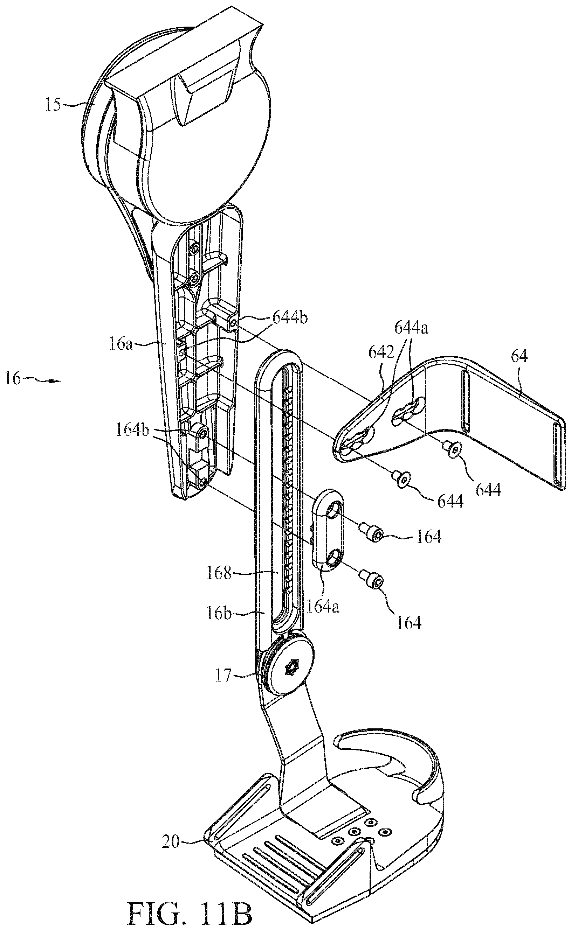

FIG. 11A is an exploded view of the shank stand 16 viewed from the right side in accordance with some embodiments of the present disclosure. FIG. 11B is an exploded view of the shank stand 16 viewed from the left side in accordance with some embodiments of the present disclosure. Referring to FIGS. 11A and 11B, the shank stand 16 includes an upper shank stand 16a and a lower shank stand 16b. The upper shank stand 16a includes a center space to contain the lower shank stand 16b.

The upper shank stand 16a is pivotally connected to the knee joint 15, and has two holes 164b. The lower shank stand 16b is pivotally connected to the ankle joint 17, and has a vertical rail 168, and a slider 164a inside the vertical rail 168.

Two bolts 164 pass through the slider 164a inside the vertical rail 168 and are screwed into the holes 164b. Therefore, the upper shank stand 16a and the lower shank stand 16b are connected through the slider 164a in the vertical rails 168. By loosening but not detaching the bolts 164 from the slider 164a, the upper shank stand 16a and the lower shank stand 16b can be moved from each other along the vertical rails 168 to extend or contract the shank stand 16 so that the length of the shank stand 16 is adjustable to fit the shank length of the user.

Moreover, a shank support 64 can engage the upper shank stand 16a. The bolts 624 pass through horizontal slots 644a of the shank support 64 and are screwed into holes 644b of the upper shank stand 16a. Therefore, the shank support 64 fixed in the upper shank stand 16a, and the shank support 64 can be moved with the upper shank stand 16a along the vertical rail 168 of the lower shank stand 16b so that the position of the shank support 64 is adjustable to fit the need of the user. By loosening but not detaching the bolts 644 from the holes 644b of the upper shank stand 16a, the shank support 64 can be adjusted forward and backward along the horizontal slots 644a.

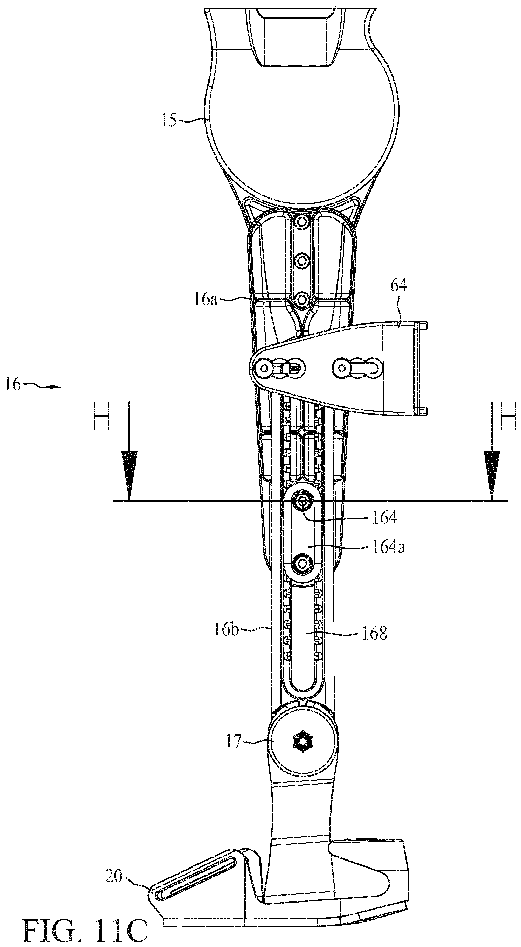

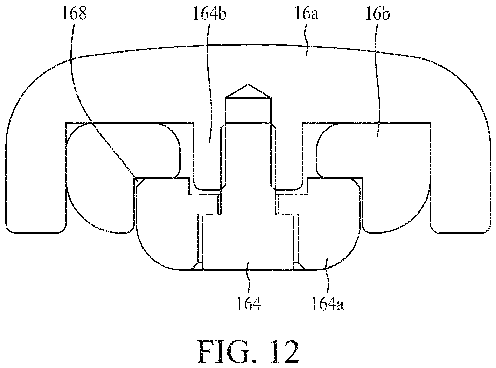

FIG. 11C is a left side view of the shank stand 16 in accordance with some embodiments of the present disclosure. FIG. 12 is a cross-sectional view along Line H-H of FIG. 11C. Referring to FIGS. 11C and 12, the bolt 164 passes through the slider 164a inside the rail 168, and is screwed into the hole 164b. The cross-section of the rail 168 is a groove with two steps in two sides to contain the slider 164a and prevent the slider 164a from being pulled out of the rail 168.

Based on some embodiments of the disclosure, by using the slots and the rails to connect two elements, such as frames, assemblies or stands, of the exoskeleton robot, a relative position of the two elements is adjustable by sliding the slider, the screws or the bolts without fully disengaging the screws or the bolts from the elements. Thus, there are advantages to save effort to adjust the relative position of the elements of the exoskeleton robot to fully meet adjustment requirements, including a chest width, a hip depth, a thigh length, a thigh circumference, a shank length, and a shank circumference.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. An exoskeleton robot (10), comprising:
a waist assembly (22) including:
a first frame (222) including a first rail (228) and a first slider (224a) inside the first rail,
a plate (225) fixed by a first bolt (224) screwed into the first slider, and
a second frame (226) connected to the plate, wherein the second frame having a slot (226a) and a second bolt (227) inside the slot;
a leg assembly (12R) installed to the second frame by the second bolt;
a back stand (19) installed to the first frame;
a chest assembly (11) installed to the back stand and including:
a third frame (112) installed to the back stand and having a second rail (118) and a second slider (117a) inside the second rail; and
a chest board (116) installed to the third frame and fixed by a third bolt (117) screwed into the second slider.

2. The exoskeleton robot of claim 1, wherein the second frame is connected to the plate through a joint (223), and the second frame is pivotally connected to the plate.

3. The exoskeleton robot of claim 1 or 2, wherein the first rail includes an expanded section (228a) to allow the first slider to put into the first rail through the expanded section.

4. The exoskeleton robot of claim 3, wherein the back stand includes a rail cover (196) installed on the expanded section and covering the expanded section.

5. The exoskeleton robot of any of the claims 1 to 4, wherein the back stand includes a third rail (198) and a third slider (114a) inside the third rail, the third rail is vertical and allows the third slider moving vertically.

6. The exoskeleton robot of any of the claims 1 to 5, wherein the first rail is horizontal and allows the first slider to move horizontally.

7. The exoskeleton robot of any of the claims 1 to 6, wherein the slot is horizontal and allows the second bolt to move horizontally.

8. The exoskeleton robot of any of the claims 1 to 7, wherein the slot includes multiple indentations (226b) along the slot to fit a head of the second bolt.

9. The exoskeleton robot of any of the claims 1 to 8, wherein the third frame includes two wings (112b), each of the two wings has the second rail and the second slider inside the second rail.

10. The exoskeleton robot of claim 5, wherein the third rail is vertical and allows the third slider to move vertically.

11. The exoskeleton robot of claim 1, wherein the second rail is horizontal and allows the second slider to move horizontally.

12. The exoskeleton robot of claim 1, wherein the leg assembly includes:
a hip joint (13); and
a thigh stand (14) including:
an upper thigh stand (14a) connected to the hip joint, including a first hole (144a) , a fourth rail (148) and a fourth slider (144b) inside the fourth rail, wherein the fourth rail is vertical and allows the fourth slider moving vertically;
a lower thigh stand (14b) including a second hole (144a), a fifth rail (149), and a fifth slider (612) inside the fifth rail, wherein the fifth rail is vertical and allows the fifth slider moving vertically;
a fourth bolt (144) passing through the first hole and screwed into the fourth slider; and
a fifth bolt (614) passing through the second hole and screwed into the fifth slider.

13. The exoskeleton robot of claim 12, further comprising:
a knee joint (15) connected to the lower thigh stand; and
a shank stand (16) including:
a lower shank stand (16b) including a sixth rail (168) and a sixth slider (164a) inside the sixth rail, wherein the sixth rail is vertical and allows the sixth slider moving vertically, and
an upper shank stand (16a) connected to the knee joint and fixed by a sixth bolt (164) screwed into the sixth rail.

14. The exoskeleton robot of claim 12 or 13, wherein the lower thigh stand includes:
a thigh support (62) with a second slot (62a);
a seventh bolt (624); and
a seventh slider (622) inside the fifth rail,
wherein the fifth rail is vertical and allows the seventh slider moving along the fifth rail vertically, wherein the seventh bolt passes through the thigh support and screwed into the seventh slider.

15. The exoskeleton robot of claim 14, wherein the second slot is horizontal and allows the seventh bolt to move along the slot horizontally.

## Patentansprüche

1. Ein Exoskelett-Roboter (10), umfassend:
eine Taillenbaugruppe (22) mit:
einen ersten Rahmen (222) mit einer ersten Schiene (228) und einem ersten Gleiter (224a) innerhalb der ersten Schiene,
eine Platte (225), die durch einen ersten Bolzen (224), der in den ersten Schieber geschraubt ist, befestigt ist, und
einen zweiten Rahmen (226), der mit der Platte verbunden ist, wobei der zweite Rahmen einen Schlitz (226a) und einen zweiten Bolzen (227) innerhalb des Schlitzes aufweist;
eine Beinbaugruppe (12R), die am zweiten Rahmen durch den zweiten Bolzen installiert ist;
einen Rückenständer (19), der an dem ersten Rahmen angebracht ist;
eine am hinteren Ständer installierte Brustbaugruppe (11), die Folgendes umfasst:
einen dritten Rahmen (112), der an dem hinteren Ständer angebracht ist und der eine zweite Schiene (118) und einen zweiten Gleiter (117a) innerhalb der zweiten Schiene aufweist ; und
ein Brustbrett (116), das am dritten Rahmen angebracht und durch einen dritten Bolzen (117), der in den zweiten Schieber geschraubt ist, befestigt ist.

2. Der Exoskelett-Roboter nach Anspruch 1, wobei der zweite Rahmen mit der Platte durch ein Gelenk (223) verbunden ist und der zweite Rahmen schwenkbar mit der Platte verbunden ist.

3. Der Exoskelett-Roboter nach Anspruch 1 oder 2, wobei die erste Schiene einen erweiterten Abschnitt (228a) aufweist, damit der erste Gleiter durch den erweiterten Abschnitt in die erste Schiene eingeführt werden kann.

4. Der Exoskelett-Roboter nach Anspruch 3, wobei der Rückenständer eine Schienenabdeckung (196) aufweist, die auf dem erweiterten Abschnitt installiert ist und den erweiterten Abschnitt abdeckt.

5. Der Exoskelett-Roboter nach einem der Ansprüche 1 bis 4, wobei der hintere Ständer eine dritte Schiene (198) und einen dritten Gleiter (114a) innerhalb der dritten Schiene aufweist, wobei die dritte Schiene vertikal ist und eine vertikale Bewegung des dritten Gleiters ermöglicht.

6. Der Exoskelett-Roboter nach einem der Ansprüche 1 bis 5, wobei die erste Schiene horizontal verläuft und eine horizontale Bewegung des ersten Gleiters ermöglicht.

7. Der Exoskelett-Roboter nach einem der Ansprüche 1 bis 6, wobei der Schlitz horizontal verläuft und eine horizontale Bewegung des zweiten Bolzens ermöglicht.

8. Der Exoskelett-Roboter nach einem der Ansprüche 1 bis 7, wobei der Schlitz mehrere Einkerbungen (226b) entlang des Schlitzes aufweist, um einen Kopf des zweiten Bolzens aufzunehmen.

9. Der Exoskelett-Roboter nach einem der Ansprüche 1 bis 8, wobei der dritte Rahmen zwei Flügel (112b) umfasst, wobei jeder der beiden Flügel die zweite Schiene und den zweiten Gleiter innerhalb der zweiten Schiene aufweist.

10. Der Exoskelett-Roboter nach Anspruch 5, wobei die dritte Schiene vertikal verläuft und eine vertikale Bewegung des dritten Gleiters ermöglicht.

11. Der Exoskelett-Roboter nach Anspruch 1, wobei die zweite Schiene horizontal verläuft und eine horizontale Bewegung des zweiten Gleiters ermöglicht.

12. Der Exoskelett-Roboter nach Anspruch 1, wobei die Beinanordnung umfasst:
ein Hüftgelenk (13); und
einen Oberschenkelständer (14) einschließlich:
einen Oberschenkelständer (14a), der mit dem Hüftgelenk verbunden ist und ein erstes Loch (144a), eine vierte Schiene (148) und einen vierten Gleiter (144b) innerhalb der vierten Schiene aufweist, wobei die vierte Schiene vertikal verläuft und eine vertikale Bewegung des vierten Gleiters ermöglicht;
einen Unterschenkelständer (14b) mit einem zweiten Loch (144a), einer fünften Schiene (149) und einem fünften Gleiter (612) innerhalb der fünften Schiene, wobei die fünfte Schiene vertikal ist und eine vertikale Bewegung des fünften Gleiters ermöglicht;
einen vierten Bolzen (144), der durch das erste Loch hindurchgeht und in den vierten Schieber geschraubt ist; und
einen fünften Bolzen (614), der durch das zweite Loch geführt und in den fünften Schieber geschraubt wird.

13. Der Exoskelett-Roboter nach Anspruch 12, der außerdem Folgendes umfasst:
ein Kniegelenk (15), das mit dem Unterschenkelständer verbunden ist; und
einen Schaftständer (16) mit:
einen unteren Schaftständer (16b) mit einer sechsten Schiene (168) und einem sechsten Gleiter (164a) innerhalb der sechsten Schiene, wobei die sechste Schiene vertikal ist und eine vertikale Bewegung des sechsten Gleiters ermöglicht, und
einen oberen Schaftständer (16a), der mit dem Kniegelenk verbunden und durch einen sechsten Bolzen (164) befestigt ist, der in die sechste Schiene geschraubt ist.

14. Der Exoskelett-Roboter nach Anspruch 12 oder 13, wobei der Unterschenkelständer umfasst:
eine Oberschenkelauflage (62) mit einem zweiten Schlitz (62a);
einen siebten Bolzen (624); und
einen siebten Schieber (622) innerhalb der fünften Schiene,
wobei die fünfte Schiene vertikal ist und es dem siebten Gleiter ermöglicht, sich entlang der fünften Schiene vertikal zu bewegen, wobei der siebte Bolzen durch die Schenkelstütze hindurchgeht und in den siebten Gleiter eingeschraubt ist.

15. Der Exoskelett-Roboter nach Anspruch 14, wobei der zweite Schlitz horizontal verläuft und es dem siebten Bolzen ermöglicht, sich entlang des Schlitzes horizontal zu bewegen.

## Revendications

1. Un robot exosquelette (10), comprenant :
un ensemble de ceinture (222) comprenant :
un premier cadre (222) comprenant un premier rail (228) et un premier coulisseau (224a) à l'intérieur du premier rail,
une plaque (225) fixée par un premier boulon (224) vissé dans le premier coulisseau, et
un deuxième cadre (226) relié à la plaque, dans lequel le deuxième cadre présente une fente (226a) et un deuxième boulon (227) à l'intérieur de la fente ; et
un assemblage de jambe (12R) installé sur le second cadre par le second boulon
un support arrière (19) installé dans le premier cadre;
un assemblage de thorax (11) installé sur le support arrière et comportant :
un troisième cadre (112) installé sur le support arrière et ayant un deuxième rail (118) et un deuxième coulisseau (117a) à l'intérieur du deuxième rail ; et
une plaque de thorax (116) installé sur le troisième cadre et fixé par un troisième boulon (117) vissé dans le deuxième coulisseau.

2. Le robot exosquelette de la revendication 1, dans lequel le deuxième cadre est relié à la plaque par une articulation (223), et le deuxième cadre est relié de manière pivotante à la plaque.

3. Le robot exosquelette de la revendication 1 ou 2, dans lequel le premier rail comprend une section élargie (228a) pour permettre au premier coulisseau de se placer dans le rail à travers la section élargie.

4. Le robot exosquelette de la revendication 3, dans lequel le support arrière comporte un couvercle de rail (196) installé sur la section élargie et couvrant la section élargie.

5. Le robot exosquelette de l'une quelconque des revendications 1 à 4, dans lequel le support arrière comporte un troisième rail (198) et un troisième coulisseau (114a) à l'intérieur du troisième rail, le troisième rail étant vertical et permettant au troisième coulisseau de se déplacer verticalement.

6. Le robot exosquelette de l'une quelconque des revendications 1 à 5, dans lequel le premier rail est horizontal et permet au premier coulisseau de se déplacer horizontalement.

7. Le robot exosquelette de l'une quelconque des revendications 1 à 6, dans lequel la fente est horizontale et permet au deuxième boulon de se déplacer horizontalement.

8. Le robot exosquelette de l'une quelconque des revendications 1 à 7, dans lequel la fente comprend de multiples indentations (226b) le long de la fente pour s'adapter à une tête du second boulon.

9. Le robot exosquelette de l'une quelconque des revendications 1 à 8, dans lequel le troisième cadre comporte deux ailes (112b), chacune des deux ailes ayant le deuxième rail et le deuxième coulisseau à l'intérieur du deuxième rail.

10. Le robot exosquelette de la revendication 5, dans lequel le troisième rail est vertical et permet au troisième coulisseau de se déplacer verticalement.

11. Le robot exosquelette de la revendication 1, dans lequel le deuxième rail est horizontal et permet au deuxième coulisseau de se déplacer horizontalement.

12. Le robot exosquelette de la revendication 1, dans lequel l'assemblage de jambe comporte :
une articulation de hanche (13); et
un repose-cuisse (14) comprenant :
un support de cuisse supérieur (14a) relié à l'articulation de la hanche, comprenant un premier trou (144a), un quatrième rail (14 8) et un quatrième curseur (144b) à l'intérieur du quatrième rail, le quatrième rail étant vertical et permettant au quatrième curseur se déplaçant verticalement ;
un support de cuisse inférieur (14b) comprenant un deuxième trou (144a), un cinquième rail (149) et un cinquième curseur (612) à l'intérieur du cinquième rail, le cinquième rail étant vertical et permettant au cinquième curseur de se déplacer verticalement ;
un quatrième boulon (144) traversant le premier trou et vissé dans le quatrième coulisseau ; et
un cinquième boulon (614) traversant le deuxième trou et vissé dans le cinquième coulisseau.

13. Le robot exosquelette de la revendication 12, comprenant en outre :
une articulation du genou (15) reliée au support inférieur de la cuisse ; et
un support de tige (16) comprenant :
un support de tige inférieur (16b) comprenant un sixième rail (168) et un sixième coulisseau (164a) à l'intérieur du sixième rail, dans lequel le sixième rail est vertical et permet au sixième coulisseau de se déplacer verticalement, et
un support de tige supérieur (16a) relié à l'articulation du genou et fixé par un sixième boulon (164) vissé dans le sixième rail.

14. Le robot exosquelette de la revendication 12 ou 13, dans lequel le support de bas de cuisse comprend :
un support de cuisse (62) avec une seconde fente (62a) ;
un septième boulon (624); et
un septième coulisseau (622) à l'intérieur du cinquième rail,
dans lequel le cinquième rail est vertical et permet au septième curseur de se déplacer verticalement le long du cinquième rail, dans lequel le septième boulon traverse le support de cuisse et se visse dans le septième curseur.

15. Le robot exosquelette de la revendication 14, dans lequel la deuxième fente est horizontale et permet au septième boulon de se déplacer horizontalement le long de la fente.
